# EUROPEAN PATENT SPECIFICATION

(11) **EP 3 418 142 B1**
(45) Date of publication and mention of the grant of the patent: **21.07.2021**
(21) Application number: 18179271.4
(22) Date of filing: 22.06.2018
(51) Int. Cl.: B60T 13/74, F16D 65/22, F16D 51/20, F16D 121/14, F16D 121/24, F16D 123/00, F16D 125/60, F16D 125/62

(54) **DRUM BRAKE SYSTEM**
TROMMELBREMSSYSTEM
SYSTÈME DE FREINAGE À TAMBOUR

(30) Priority: 23.06.2017 JP 2017122962
(43) Date of publication of application: 26.12.2018
(73) Proprietor: Hitachi Astemo, Ltd., Hitachinaka-shi, Ibaraki 312-8503 (JP)
(72) Inventor: Usui, Koji, Ibaraki 312-8503 (JP)
(74) Representative: Hoffmann Eitle

(56) References cited:
- DE-A1-102012 201 579
- JP-A- 2016 222 076
- US-A- 5 092 428

## Description

### BACKGROUND

### 1. Technical Field

The present invention relates to a drum brake system including a back plate to which an anchor block is fixed, a brake drum configured to rotate together with a wheel, a pair of brake shoes arranged in the back plate with one end portions supported to the anchor block, a wheel cylinder fixed to the back plate and configured to enlarge the brake shoes such that the brake shoes are in sliding contact with an inner periphery of the brake drum so as to obtain a service brake state, a parking brake lever configured to operate in correspondence to pulling of a brake cable so as to enlarge the brake shoes, and an electric actuator coupled to the brake cable and configured to pull the brake cable so as to obtain a parking brake state.

### 2. Background art

JP 2014 504711 A discloses a drum brake system in which a brake cable is pulled by an electric actuator, so that a parking brake lever is operated and a pair of brake shoes is enlarged to generate a parking brake force.

According to the disclosure of JP 2014 504711 A, as gaps between an inner surface of a brake drum and the brake shoes increase, an operating amount of the parking brake lever excessively increases upon parking brake, so that an operating amount of a member configuring the electric actuator excessively increases at the electric actuator-side.

DE 10 2012 201 579 A1 discloses an electric motor operable drum brake module for motor vehicles, including a parking brake function, comprising an electromechanical actuator which is attached to one side of the armature plate, and comprising a red-Trans-converter for converting a rotary driving rotational movement translational into an actuating movement of the brake shoes which are disposed on one of the actuator facing away from side of the armature plate in a brake drum, and at least one supporting device between the brake shoes so that they can execute an actuating movement in the direction of brake drum comprising.

US 5,092,428 A discloses a drum brake in which a parking brake is incorporated. A parking brake lever is mounted in the interior of a vehicle and is operable to pull a parking lever through a cable. The rotation of the parking lever causes a pair of brake shoes to be forced tightly against a brake drum. This results in the generation of a braking force. A stopper member is provided to limit the maximum angular position of the parking brake. This design prevents contact of the parking lever with a rotary shaft due to excessive pulling of the parking lever and thus damage of the rotary shaft as well as the parking lever.

JP 2016 222076 A discloses a tip part of a brake lever which is turned by an electric motor up to a first turning position around an attachment shaft upon drum brake operation, therefore, when the first turning position is set as a turning position of the tip part of the brake lever to which the tip part of the brake lever is turned in order to generate a braking force required upon braking, the tip part of the brake lever is turned up to a first rotation position and a required braking force is generated. Further, in the drum brake, such a control that an output shaft of the electric motor is merely rotated to the first rotation direction until the first limit switch is pushed becomes simpler as compared to such a conventional electrically driven drum brake that a current value of a current supplied to the electric motor is feedback controlled.

### SUMMARY

The present invention has been made in view of the above situations, and is to provide a drum brake system capable of preventing operating amounts of a parking brake lever and an electric actuator from excessively increasing upon parking brake.

A drum brake system in accordance with the present invention is defined in claim 1. Claim 2 relates to a preferred embodiment.

In order to achieve the object, according to the first feature of the invention, there is provided a drum brake system comprising: a back plate to which an anchor block is fixed; a brake drum configured to rotate together with a wheel; a pair of brake shoes arranged in the back plate with one end portions supported to the anchor block; a wheel cylinder fixed to the back plate and configured to enlarge the brake shoes such that the brake shoes are in sliding contact with an inner periphery of the brake drum so as to obtain a service brake state; a parking brake lever configured to operate in correspondence to pulling of a brake cable so as to enlarge the brake shoes; and an electric actuator coupled to the brake cable and configured to pull the brake cable so as to obtain a parking brake state, characterized in that a stopper configured to be in contact with the parking brake lever so as to restrain an operating end of the parking brake lever in the parking brake state is provided with a fixed member arranged in the back plate with being fixed to the back plate. The stopper is configured to have elasticity. The fixed member is formed to have a thin plate shape so that the stopper is bent to exhibit elasticity upon contact of the parking brake lever.

In the second feature of the invention, in addition to the structure of the first feature, the fixed member is a cable guide having a guide part configured to guide the brake cable and mounted to the back plate together with the anchor block, and the cable guide is integrally provided with the stopper.

According to the first feature of the present invention, a situation where upon the parking brake, an operating amount of the parking brake lever increases and an operating amount of a member configuring the electric actuator excessively increases as a result of enlargement of gaps between an inner surface of the brake drum and the brake shoes can be restrained by the configuration where the parking brake lever is contacted to the stopper of the fixed member fixedly arranged in the back plate. Further, since it is possible to restrain an operating amount of the parking brake lever at the drum brake-side, it is not necessary to provide a stopper in the electric actuator, so that it is possible to simplify the structure of the electric actuator.

Also, according to the second feature of the present invention, since the stopper is integrally provided with the cable guide mounted to the back plate together with the anchor block, it is not necessary to provide a dedicated component for implementing a stopper function, and it is possible to prevent the excessive operating amounts of the parking brake lever and the electric actuator by avoiding increases in the number of components and the processing man-hour.

Also, according to the first feature of the present invention, since the stopper has the elasticity, even though the parking brake lever shockingly collides with the stopper, it is possible to absorb the shock and to prevent a locked state of the constitutional members of the electric actuator.

### BRIEF DESCRIPTION OF THE DRAWINGS

FIG. 1 is a front view of a drum brake system.
FIG. 2 is a sectional view taken along a line 2-2 of FIG. 1.
FIG. 3 is a perspective view as seen from an arrow 3 direction of FIG. 1.
FIG. 4 is a sectional view taken along a line 4-4 of FIG. 3, in a state where a brake cable is loosened.
FIG. 5 is a sectional view corresponding to FIG. 4, in a state where the brake cable is pulled.
FIG. 6 is a sectional view taken along a line 6-6 of FIG. 1.
FIG. 7 is a perspective view of an electric actuator.
FIG. 8 is a sectional view taken along a line 8-8 of FIG. 5.

### DETAILED DESCRIPTION OF EXEMPLARY EMBODIMENTS

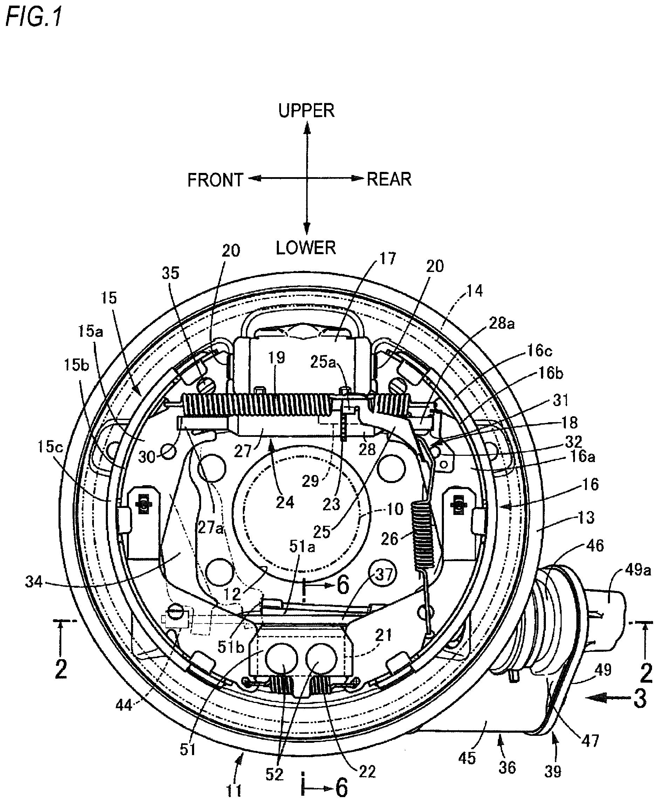

An illustrative embodiment of the present invention will be described with reference to FIGS. 1 to 8. First, in FIGS. 1 to 3, for example, a left rear wheel of a four-wheeled vehicle is provided with a drum brake system 11 in accordance with an illustrative embodiment of the present invention. The drum brake system 11 includes a fixed back plate 13 having a through-hole 12, in which an axle 10 of the left rear wheel is to be inserted, formed at a central part, first and second brake shoes 15, 16 arranged inside the back plate 13 to be slidably contactable to an inner periphery of a brake drum 14 configured to rotate together with the left rear wheel, a wheel cylinder 17 fixed to an upper part of the back plate 13 so as to apply a force of enlarging the first and second brake shoes 15, 16, a braking gap automatic adjustment means (a so-called automatic adjuster) 18 for automatically adjusting gaps between the first and second brake shoes 15, 16 and the brake drum 14, and a return spring 19 provided between the first and second brake shoes 15, 16.

The first and second brake shoes 15, 16 are configured by arch webs 15a, 16a conforming to the inner periphery of the brake drum 14, rims 15b, 16b provided consecutively so as to be perpendicular to outer peripheries of the webs 15a, 16a, and linings 15c, 16c bonded to outer peripheries of the rims 15b, 16b.

Outer end portions of a pair of pistons 20 provided to the wheel cylinder 17 are arranged to face the webs 15a, 16a at upper end portions of the first and second brake shoes 15, 16. Also, an anchor block 21, which is a support point when the first and second brake shoes 15, 16 are enlarged and contracted, is fixed to a lower part of the back plate 13 with supporting one end portions (in the illustrative embodiment, lower end portions) of the first and second brake shoes 15, 16. The wheel cylinder 17 is configured to operate by an output fluid pressure of a master cylinder (not shown), which is to be operated by a brake pedal, thereby applying a force of enlarging the first and second brake shoes 15, 16 about the anchor block 21, which is a support point.

A coil spring 22 for urging lower end portions of the webs 15a, 16a toward the anchor block 21 is provided between the lower end portions of the webs 15a, 16a of the first and second brake shoes 15, 16, and the return spring 19 for urging the first and second brake shoes 15, 16 in a contraction direction is provided between upper end portions of the webs 15a, 16a of the first and second brake shoes 15, 16.

The braking gap automatic adjustment means 18 includes a contraction position restraint strut 24 provided between the webs 15a, 16a of the first and second brake shoes 15, 16 and capable of extending as a result of rotation of an adjusting gear 23, an adjusting lever 25 having a feed claw 25a to be engaged with the adjusting gear 23 and rotatably supported to the web 16a of the second brake shoe 16, which is one brake shoe of the first and second brake shoes 15, 16, and an adjusting spring 26 for rotatively urging the adjusting lever 25 toward a side of rotating the adjusting gear 23 in a direction of extending the contraction position restraint strut 24.

The contraction position restraint strut 24 is to restrain contraction positions of the first and second brake shoes 15, 16, and includes a first rod 27 having a first engagement part 27a, which is to be engaged to an upper part of the web 15a of the first brake shoe 15 of the first and second brake shoes 15, 16, a second rod 28 having a second engagement part 28a, which is to be engaged to an upper part of the web 16a of the second brake shoe 16, and arranged coaxially with the first rod 27, and an adjusting bolt 29 having one end portion inserted in the first rod 27 so as to be relatively moveable in an axial direction and the other end portion coaxially screwed to the second rod 28. The adjusting gear 23 is arranged between the first and second rods 27, 28 and is formed on an outer periphery of the adjusting bolt 29.

The upper part of the web 15a of the first brake shoe 15 is provided with a first engagement concave part 30 to which the first engagement part 27a is to be engaged, and the upper part of the web 16a of the second brake shoe 16 is provided with a second engagement concave part 31 to which the second engagement part 28a is to be engaged.

The adjusting lever 25 having the feed claw 25a to be engaged to the adjusting gear 23 is rotatably supported to the web 16a of the second brake shoe 16 via a support shaft 32, and the adjusting spring 26 is provided between the web 16a of the second brake shoe 16 and the adjusting lever 25. Further, a spring force of the adjusting spring 26 is set lower than a spring force of the return spring 19.

According to the braking gap automatic adjustment means 18, while the first and second brake shoes 15, 16 are enlarged as a result of an operation of the wheel cylinder 17, when the brake shoes are enlarged above a predetermined value due to wears of the linings 15c, 16c, the adjusting lever 25 is rotated about an axis of the support shaft 32 by the spring force of the adjusting spring 26. Thereby, an effective length of the contraction position restraint strut 24 is incrementally corrected in correspondence to the rotation of the adjusting gear 23.

The drum brake system 11 includes a parking brake lever 34 having one end portion, which is rotatably supported to the web 15a of the first brake shoe 15 of the first and second brake shoes 15, 16, and engaged to one end portion of the contraction position restraint strut 24.

The parking brake lever 34 vertically extends with partially overlapping the web 15a of the first brake shoe 15, as seen from the front. An upper end portion of the parking brake lever 34 is coupled to the upper part of the web 15a of the first brake shoe 15 via a pin 35, and the first engagement part 27a of the contraction position restraint strut 24 is engaged to an upper part of the parking brake lever 34.

When a parking brake of a vehicle operates, the parking brake lever 34 is rotatively driven in a counterclockwise direction of FIG. 1 about the pin 35, which is a support point. As the parking brake lever 34 rotates, a force of bringing the lining 16c of the second brake shoe 16 into pressure-contact with the inner periphery of the brake drum 14 is applied to the second brake shoe 16 via the contraction position restraint strut 24. Also, when the parking brake lever 34 is further rotatively driven in the counterclockwise direction of FIG. 1, the parking brake lever 34 is rotated about an engaging point with the first engagement part 27a of the contraction position restraint strut 24, which is a support point, and the first brake shoe 16 is enlarged via the pin 35, so that the lining 15c of the first brake shoe 15 is pressure-contacted to the inner periphery of the brake drum 14. That is, the parking brake lever 34 is operated to an operating position at which the linings 15c, 16c of the first and second brake shoes 15, 16 are pressure-contacted to the inner periphery of the brake drum 14, and in this state, a parking brake state is obtained.

When the applying of the rotating driving force to the parking brake lever 34 is stopped, the parking brake lever 34 returns to a non-operating position, together with the first and second brake shoes 15, 16 being operated in a direction of separating from the inner periphery of the brake drum 14 by the spring force of the return spring 19, and the parking brake lever 34 is urged toward the non-operating position.

The parking brake lever 34 is configured to be rotatively driven by power to be fed from an electric actuator 36. A brake cable 37 that is to be pulled by the electric actuator 36 is configured to rotatively drive the parking brake lever 34 so as to pressurize the contraction position restraint strut 24 to the web 15a of the second brake shoe 15 as a result of the pulling of the brake cable 37 and to thereby obtain the parking brake state, and is connected to a lower part of the parking brake lever 34.

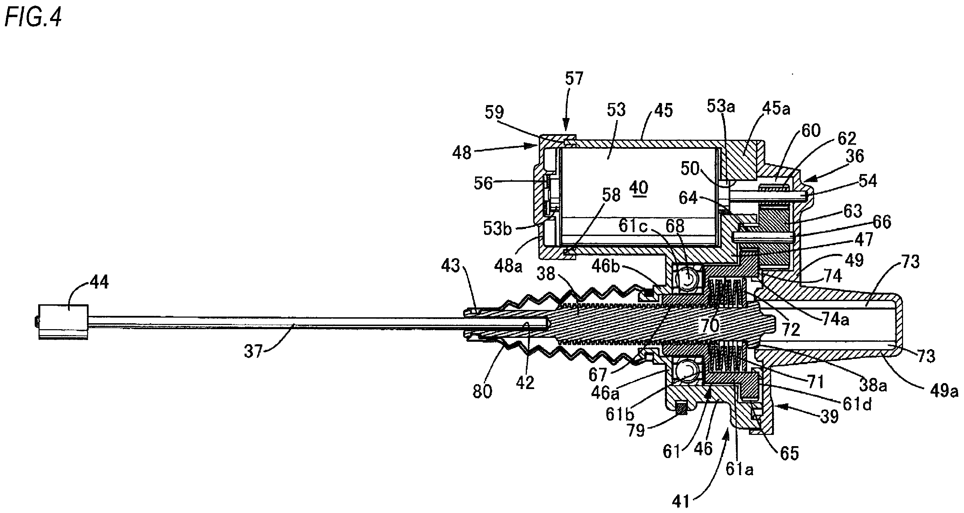

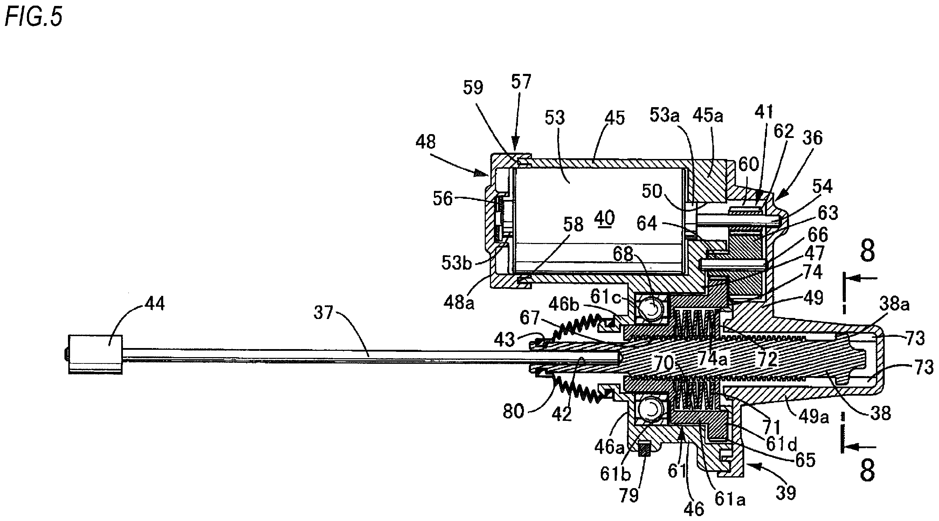

Referring to FIGS. 4 and 5, the electric actuator 36 includes a screw shaft 38 coupled to the brake cable 37, an actuator case 39 configured to support the screw shaft 38 such that the screw shaft 38 is reciprocally moveable in an axis direction while restraining rotation of the screw shaft, an electric motor 40 supported to the actuator case 39 so as to be rotatable in forward and backward directions, and a movement conversion mechanism 41 configured to convert rotary movement to be generated from the electric motor 40 into linear movement of the screw shaft 38 and accommodated in the actuator case 39 with being provided between the electric motor 40 and the screw shaft 38.

An end portion of the screw shaft 38 facing toward the brake cable 37 is coaxially formed with a bottomed coupling hole 42, and an end portion of the brake cable 37 facing toward the electric actuator 36 is inserted in the coupling hole 42. Further, an outer periphery of the screw shaft 38 is formed with an annular groove 43 in the vicinity of an opening end of the coupling hole 42. The annular groove 43 is crimped so that a part of the screw shaft 38 is to bite the brake cable 37 in a state where the brake cable 37 is inserted in the coupling hole 42, so that the screw shaft 38 is coupled to the brake cable 37.

The brake cable 37 is pulled into the back plate 13 from the electric actuator 36 mounted to the back plate 13. An engaging piece 44 to be fixed to the other end portion of the brake cable 37 is engaged to a lower end portion of the parking brake lever 34.

The electric actuator 36 is configured to switch a state in which the screw shaft 38 is to be moved in a direction of pulling the brake cable 37 so as to drive the parking brake lever 34 toward the operating position, as shown in FIG. 5, and a state in which the screw shaft 38 is to be moved in a direction of loosening the brake cable 37 so as to return the parking brake lever 34 from the operating position to the non-operating position, as shown in FIG. 4, by changing a rotating direction of the electric motor 40.

Further, a stopper 51b configured to be in contact with the parking brake lever 34 so as to restrain an operating end of the parking brake lever 34 in the parking brake state is provided with a fixed member arranged in the back plate 13 with being fixed to the back plate 13. In the illustrative embodiment, the fixed member is a cable guide 51 having a guide part 51a configured to guide the brake cable 37 and mounted to the back plate 13 together with the anchor block 21.

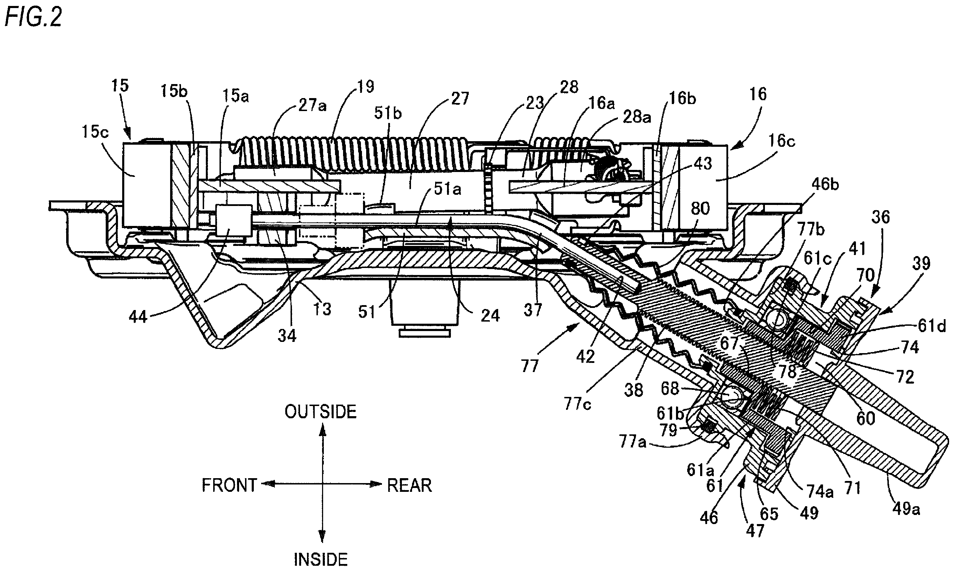

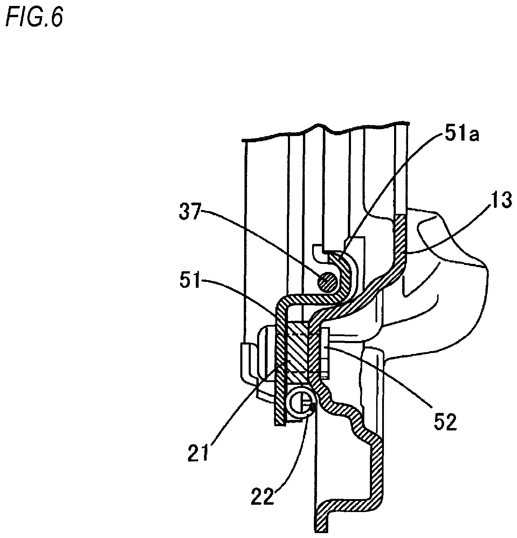

In FIG. 6, the cable guide 51 is mounted to a lower part of the back plate 13 together with the anchor block 21 by a pair of rivets 52 with sandwiching the anchor block 21 between the cable guide and the lower part of the back plate 13. As shown in FIG. 2, the cable guide 51 is provided integrally with a guide part 51a configured to guide the brake cable 37 and having a substantially U-shaped cross section, is also provided with the stopper 51b, and is configured to bring a lower end portion of the parking brake lever 34 into contact with the stopper 51b in the parking brake state, thereby restraining the operating end of the parking brake lever 34, as shown with chained lines in FIGS. 1 and 2.

Also, the stopper 51b is configured to have elasticity. In the illustrative embodiment, the cable guide 51 is formed to have a thin plate shape so that the stopper 51b is bent to exhibit the elasticity upon contact of the parking brake lever 34.

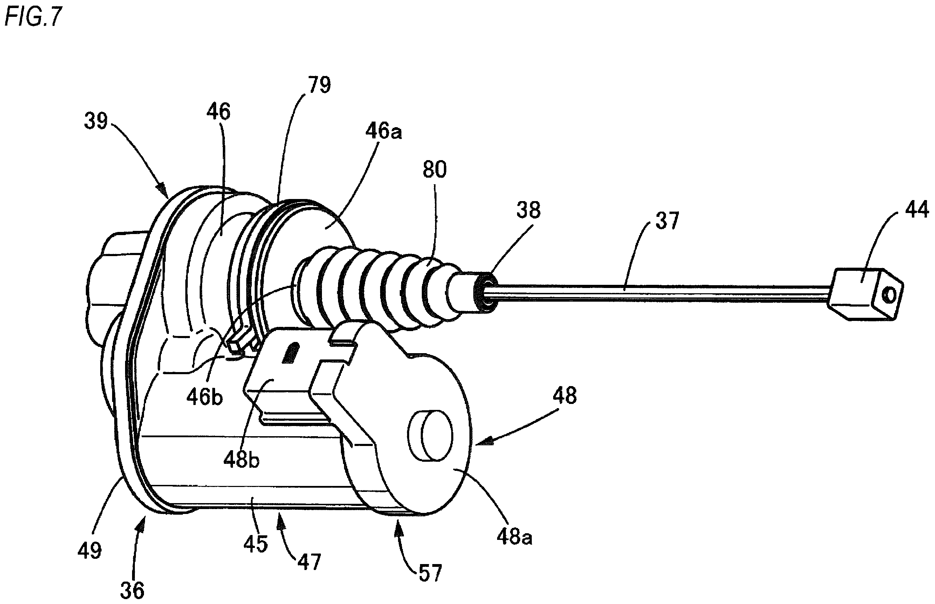

Referring to FIG. 7, the actuator case 39 includes a case main body 47 having first and second integrated accommodation cylinder parts 45, 46, a first cover member 48 joined to an opening end of the first accommodation cylinder part 45, and a second cover member 49 joined to the case main body 47 from an opposite side to the first cover member 48.

The first accommodation cylinder part 45 has a bottomed circular cylinder shape having a first end wall part 45a provided at one end portion, and a fitting hole 50 is coaxially formed at a central portion of the first end wall part 45a. The second accommodation cylinder part 46 is arranged at a side of the first accommodation cylinder part 45 and has a bottomed circular cylinder shape having one opened end portion and the other end portion closed by a second end wall part 46a arranged at a longitudinally intermediate portion of the first accommodation cylinder part 45, and a circular cylinder-shaped support cylinder part 46b in which the screw shaft 38 is to be inserted protrudes integrally from a central portion of the second end wall part 46a.

A circular cylinder-shaped first bearing part 53a configured to rotatably support a motor shaft 54 protrudes from one axial end portion of a motor case 53 of the electric motor 40. One end portion of the motor shaft 54 protrudes from one end portion of the motor case 53 through the first bearing part 53a, and a bottomed circular cylinder-shaped second bearing part 53b configured to rotatably support the other end portion of the motor shaft 54 protrudes from the other axial end portion of the motor case 53.

The electric motor 40 is accommodated in the first accommodation cylinder part 45 with the first bearing part 53a being fitted in the fitting hole 50 of the case main body 47 and one end portion of the motor case 53 being in contact with the first end wall part 45a. The electric motor 40 is accommodated in the first accommodation cylinder part 45 in a state where a part of the electric motor 40, in the illustrative embodiment, the other end portion of the motor case 53 at a side at which the second bearing part 53b is provided faces outward.

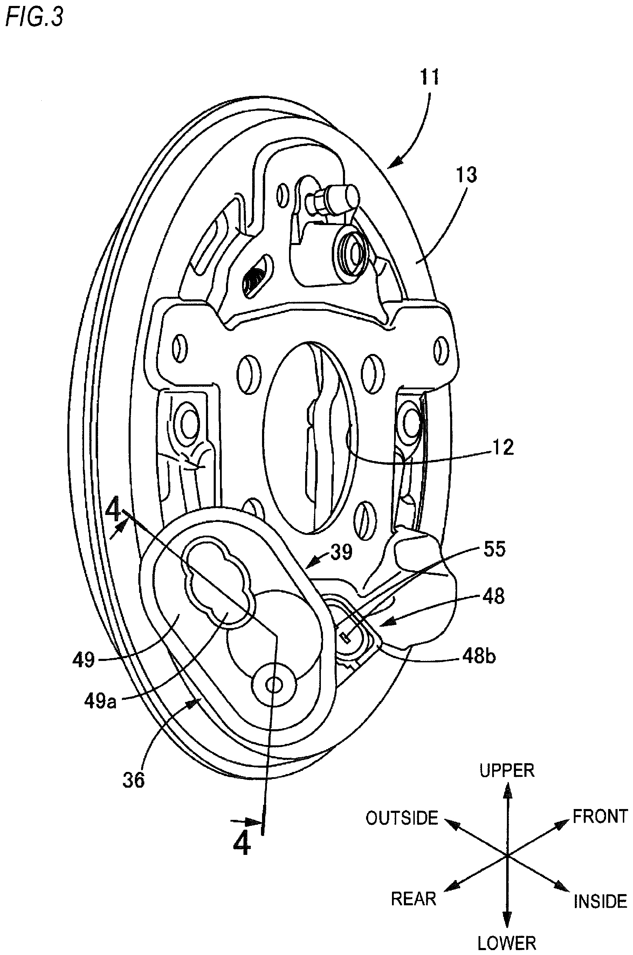

The first cover member 48 integrally has a cover part 48a configured to cover the part, which faces outward from the first accommodation cylinder part 45, of the electric motor 40 accommodated in the first accommodation cylinder part 45 and joined to the opening end of the first accommodation cylinder part 45, and a connector part 48b arranged at a side of the first accommodation cylinder part 45 and protruding laterally from the cover part 48a with terminals 55 (refer to FIG. 3) continuing to the electric motor 40 being arranged thereon, and a wave washer 56 is provided between the second bearing part 53b of the electric motor 40 and the cover part 48a.

Further, the first cover member 48 is joined to the first accommodation cylinder part 45 so that a circumferential relative position of the connector part 48b to the first accommodation cylinder part 45 can be arbitrarily selected at least at a plurality of positions around an axis of the first accommodation cylinder part 45. The first accommodation cylinder part 45 and a joining part 57 of the cover part 48a are formed to have a circular or regular polygonal cross section and are joined by bonding or welding.

In the illustrative embodiment, the cover part 48a has a dish shape opening toward the first accommodation cylinder part 45, and an opening end of the cover part 48a is formed with an annular concave part 58 coaxial with the first accommodation cylinder part 45 having a circular cross section. In the meantime, a ring-shaped fitting protrusion 59 to be fitted to the annular concave part 58 protrudes from the opening end portion of the first accommodation cylinder part 45, and the joining part 57 is configured by the cover part 48a and the first accommodation cylinder part 45 bonded each other with the fitting protrusion 59 being fitted to the annular concave part 58, and has a circular cross section.

The second cover member 49 is joined to the case main body 47 so that a gear chamber 60 is formed between the second cover member and the case main body 47. Upon the joining, the second cover member 49 may be joined to the case main body 47 by bonding or welding. Also, the movement conversion mechanism 41 has a nut 61 to be screwed to the screw shaft 38, as one constitutional element, and is accommodated in the gear chamber 60.

The movement conversion mechanism 41 includes a drive gear 62 provided to the motor shaft 54 of the electric motor 40, an intermediate large-diameter gear 63 configured to mesh with the drive gear 62, an intermediate small-diameter gear 64 configured to rotate together with the intermediate large-diameter gear 63, the nut 61, and a driven gear 65 provided to the nut 61 and configured to mesh with the intermediate small-diameter gear 64.

The intermediate large-diameter gear 63 and the intermediate small-diameter gear 64 are integrally formed, and are rotatably supported by a support shaft 66 parallel with the motor shaft 54 and the screw shaft 38. Also, both end portions of the support shaft 66 are supported by the case main body 47 and the second cover member 49.

The nut 61 integrally has a large-diameter circular cylinder part 61a rotatably accommodated in the second accommodation cylinder part 46, an inward collar part 61b protruding radially inward from an opposite end portion of the large-diameter circular cylinder part 61a to the second cover member 49, a small-diameter circular cylinder part 61c continuing to an inner peripheral edge of the inward collar part 61b, extending in an opposite side to the second cover member 49 and penetrating the screw shaft 38, and an outward collar part 61d protruding radially outward from an end portion of the large-diameter circular cylinder part 61a facing toward the second cover member 49. An inner periphery of the small-diameter circular cylinder part 61c is formed with a female screw 67 to be screwed to the screw shaft 38, and an outer periphery of the outward collar part 61d is formed with the driven gear 65. Also, a ball bearing 68 is mounted between the small-diameter circular cylinder part 61c and an end portion of the second accommodation cylinder part 46 facing toward the second end wall part 46a.

At an opposite side to the brake cable 37, an end portion of the screw shaft 38 is provided with a flange part 38a radially outward. In the meantime, the nut 61 is formed with a concave part 70, which is defined by the large-diameter circular cylinder part 61a and inward collar part 61b of the nut 61 so as to open toward the flange part 38a.

The screw shaft 38 is configured so that when pulling the brake cable 37 so as to drive the parking brake lever 34 to the operating position, the flange part 38a is moved to separate from the nut 61, as shown in FIG. 5, and when loosening the brake cable 37 so as to return the parking brake lever 34 from the operating position to the non-operating position, the flange part 38a is moved to come close to the nut 61, as shown in FIG. 4. A plurality of disc springs 71, which functions as the resilient member configured to be interposed between the flange part 38a and the nut 61 and to urge the flange part 38a in the direction of separating from the nut 61 upon the movement of the screw shaft 38 in the direction in which the brake cable 37 is to be loosened, is accommodated in the concave part 70.

In the concave part 70, the plurality of disc springs 71 and a circular disc-shaped retainer 72 configured to sandwich the disc springs 71 between the retainer and the inward collar part 61b of the nut 61 are accommodated.

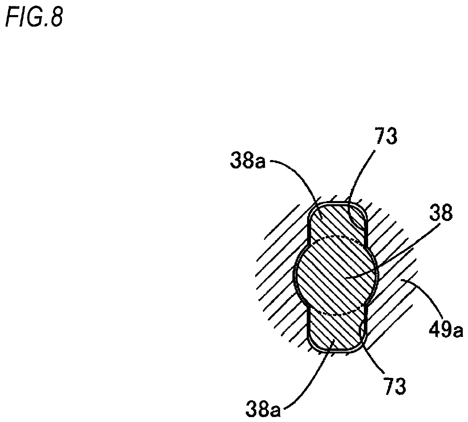

Referring to FIG. 8, the flange part 38a is formed to protrude radially outward in both directions from the screw shaft 38 along one diameter line of the screw shaft 38. In the meantime, the second cover member 49 of the actuator case 39 is integrally formed with a bottomed circular cylinder-shaped guide cylinder part 49a configured to surround the screw shaft 38, and an inner surface of the guide cylinder part 49a is formed with a pair of locking grooves 73 extending along the axis of the screw shaft 38 and configured to slidably engage the flange part 38a thereto.

A bearing member 74 to which a thrust load is to be applied from the nut 61 is mounted between an opening end portion of the guide cylinder part 49a and the nut 61. The bearing member 74 integrally has a short circular cylinder part 74a that is to enter the concave part 70.

Here, as shown in FIG. 5, when pulling the brake cable 37 so as to drive the parking brake lever 34 from the non-operating position to the operating position, an outer periphery of the retainer 72 is contacted to the short circular cylinder part 74a of the bearing member 74, so that the disc springs 71 are restrained from separating from the concave part 70. Also, as shown in FIG. 4, when the screw shaft 38 is moved to loosen the brake cable 37, the elastic force of the disc springs 71 is applied to the flange part 38a via the retainer 72.

A mounting cylinder part 77 extending rearward and inward with respect to a vehicle width direction integrally protrudes from the back plate 13 of the drum brake system 11 mounted to the left rear wheel. The mounting cylinder part 77 has a large-diameter cylinder part 77a having one end opening rearward and inward with respect to the vehicle width direction, and a small-diameter cylinder part 77c coaxially continuing to the large-diameter cylinder part 77a via a step portion 77b interposed between the small-diameter cylinder part and the other end of the large-diameter cylinder part 77a. The second accommodation cylinder part 46 of the first cover member 48 of the actuator case 39 of the electric actuator 36 is inserted in the large-diameter cylinder part 77a, and a C-shaped snap ring 79 mounted to the outer periphery of the second accommodation cylinder part 46 is engaged to a locking groove 78 formed on the inner periphery of the large-diameter cylinder part 77a, so that the actuator case 39 is mounted to the mounting cylinder part 77.

As described above, the actuator case 39 is mounted to the mounting cylinder part 77 of the back plate 13, so that the actuator case 39 is mounted to a rear side of the back plate 13 with respect to a front and rear direction of the vehicle and the connector part 48b faces rearward with respect to the front and rear direction of the vehicle. Also, a bellows-shaped boots 80 configured to cover the protrusion of the screw shaft 38 from the second accommodation cylinder part 46 is provided between an outer periphery of the small-diameter cylinder part 46b of the second accommodation cylinder part 46 and an outer periphery of one end portion of the screw shaft 38.

Subsequently, operations of the illustrative embodiment are described. The drum brake system 11 can obtain the parking brake state by pulling the brake cable 37 coupled to the parking brake lever 34 with the electric actuator 36, and can favorably control operation and release of the parking brake with the electric actuator 36.

Further, the cable guide 51, which functions as the fixed member fixed to the back plate 13 of the drum brake system 11 and arranged in the back plate 13, is integrally provided with the guide part 51a configured to guide the brake cable 37 and the stopper 51b configured to be in contact with the parking brake lever 34 so as to restrain the operating end of the parking brake lever 34 in the parking brake state. Therefore, upon the parking brake, the excessive operating amount of the parking brake lever 34 as a result of enlargement of the gaps between the inner surface of the brake drum 14 and the first and second brake shoes 15, 16 is restrained as a result of the contact of the parking brake lever 34 with the stopper 51b. Also, it is possible to prevent the operating amount of the constitutional member, for example, the screw shaft 38 of the electric actuator 36 from excessively increasing. For example, it is possible to prevent the screw shaft 38 from operating until the screw shaft contacts the closed end of the bottomed circular cylinder-shaped guide cylinder part 49a of the second cover member 49. Further, since it is possible to restrain the operating amount of the parking brake lever 34 at the drum brake-side, it is not necessary to provide a stopper in the electric actuator 36, so that it is possible to simplify the structure of the electric actuator 36.

Also, the cable guide 51 has the guide part 51a configured to guide the brake cable 37, is mounted to the back plate 13 together with the anchor block 21 and is integrally provided with the stopper 51b. Accordingly, it is not necessary to provide a dedicated component for implementing a stopper function and it is possible to prevent the excessive operating amount of the parking brake lever 34 by avoiding increases in the number of components and the processing man-hour, so that it is possible to favorably apply the present invention to the drum brake system 11.

Also, since the stopper 51b is configured to have the elasticity, even though the parking brake lever 34 shockingly collides with the stopper 51b, it is possible to absorb the shock. Accordingly, it is possible to prevent a locked state of the constitutional members, for example, the screw shaft 38 and the nut 61 of the electric actuator 36.

Also, the electric actuator 36 includes the screw shaft 38 coupled to the brake cable 37 continuing to the parking brake lever 34 urged toward the non-operating position, the actuator case 39 configured to support the screw shaft 38 such that the screw shaft 38 is reciprocally moveable in the axis direction while restraining the rotation of the screw shaft, the electric motor 40 supported to the actuator case 39 to be rotatable in the forward and backward directions, and the movement conversion mechanism 41 having the nut 61 to be engaged with the screw shaft 38, as one constitutional element, configured to convert the rotary movement to be generated from the electric motor 40 into the linear movement of the screw shaft 38, and accommodated in the actuator case 39 with being provided between the electric motor 40 and the screw shaft 38, and can switch a state in which the brake cable 37 is to be pulled so as to drive the parking brake lever 34 toward the operating position and a state in which the brake cable 37 is to be loosened so as to return the parking brake lever 34 from the operating position to the non-operating position by changing the rotating direction of the electric motor 40. However, the screw shaft 38 is provided with the flange part 38a protruding radially outward, the nut 61 is coaxially formed with the concave part 70 opening toward the flange part 38a, and the disc springs 71, which are interposed between the flange part 38a and the nut 61 and apply the resilient force of urging the flange part 38a in the direction of separating from the nut 61 when moving the screw shaft 38 in the direction in which the brake cable 37 is to be loosened, are accommodated in the concave part 70.

Accordingly, the resilient force of the disc springs 71 is applied to the screw shaft 38 when moving the screw shaft 38 in the direction in which the brake cable 37 is to be loosened, so that it is possible to apply a load to the electric motor 40 upon the return operation. Furthermore, since the disc springs 71 are accommodated in the concave part 70 formed in the nut 61 coaxially with the screw shaft 38, it is not necessary to secure an extra space for arranging therein the disc springs 71, so that it is possible to miniaturize the actuator case 39. Also, since the resilient force of the disc springs 71 is limitedly applied to the actuator case 39 only upon the parking brake, it is not necessary to increase the strength of the actuator case 39 beyond necessity.

Also, since the plurality of stacked disc springs 71 is accommodated in the concave part 70, it is possible to change a resilient load by selecting the number of the disc springs 71, so that it is possible to easily change the specification, in correspondence to a type of the electric actuator 36.

Also, the flange part 38a is formed to protrude radially outward in both directions from the screw shaft 38 along one diameter line of the screw shaft 38, and the actuator case 39 is formed with the pair of locking grooves 73 extending along the axis of the screw shaft 38 and configured to slidably engage the flange part 38a thereto. Therefore, it is possible to restrain the rotation of the screw shaft 38 while allowing the screw shaft 38 to move in the axis direction, so that it is possible to simplify the structure of restraining the rotation of the screw shaft 38.

Also, since the electric actuator 36 is mounted to the back plate 13 of the drum brake system 11, it is possible to favorably mount the present invention to the drum brake system 11.

Also, the actuator case 39 of the electric actuator 36 includes the case main body 47 having the first accommodation cylinder part 45 configured to accommodate therein the electric motor 40 for feeding power so as to obtain the parking brake state with a part of the electric motor 40 facing outward, and the first cover member 48 integrally having the cover part 48a configured to join to the first accommodation cylinder part 45 with covering the part of the electric motor 40 and the connector part 48b arranged at a side of the first accommodation cylinder part 45 and protruding laterally from the cover part 48a with the terminals 55 continuing to the electric motor 40 being arranged thereon, and the first cover member 48 is joined to the first accommodation cylinder part 45 so that the circumferential relative position of the connector part 48b to the first accommodation cylinder part 45 can be arbitrarily selected at least at the plurality of positions. Therefore, it is not necessary to make the actuator case 39, in conformity to layouts of respective vehicles, and it is possible to easily change a position of the connector part 48b relative to the actuator case 39, so that it is possible to secure the general versatility and to cope with the diverse types of vehicles, thereby suppressing the increase in cost.

Also, since the first accommodation cylinder part 45 and the joining part 57 of the cover part 48a are formed to have a circular or regular polygonal cross section, it is possible to increase the degree of freedom of the position of the connector part 48b relative to the actuator case 39, so that it is possible to easily change the direction of the connector part 48b.

Also, since the actuator case 39 of which the connector part 48b faces rearward with respect to the front and rear direction of the vehicle is mounted to the rear side of the back plate 13 of the drum brake system 11 of the rear wheel with respect to the front and rear direction of the vehicle, the connector part 48b faces rearward with respect to the front and rear direction of the vehicle, so that it is possible to increase the maintainability of the connector part 48b upon the mounting to the vehicle and to protect the connector part 48b from stones bounding upon traveling of the vehicle.

Also, the first cover member 48 is bonded or welded to the first accommodation cylinder part 45. Therefore, when joining the first cover member 48 to the first accommodation cylinder part 45, it is possible to securely join the first cover member 48 to the first accommodation cylinder part 45 while easily changing the direction of the connector part 48b, without increasing the number of components.

Although the illustrative embodiment of the present invention has been described, the present invention is not limited to the illustrative embodiment and a variety of design changes can be made without departing from the present invention defined in the claims.

## Claims

1. A drum brake system comprising: a back plate (13) to which an anchor block (21) is fixed; a brake drum (14) configured to rotate together with a wheel; a pair of brake shoes (15, 16) arranged in the back plate with one end portions supported to the anchor block (21); a wheel cylinder (17) fixed to the back plate (13) and configured to enlarge the brake shoes (15, 16) such that the brake shoes (15, 16) are in sliding contact with an inner periphery of the brake drum (14) so as to obtain a service brake state; a parking brake lever (34) configured to operate in correspondence to pulling of a brake cable (37) so as to enlarge the brake shoes (15, 16); and an electric actuator (36) coupled to the brake cable (37) and configured to pull the brake cable (37) so as to obtain a parking brake state,
**characterized in that** a stopper (51b) configured to be in contact with the parking brake lever (34) so as to restrain an operating end of the parking brake lever (34) in the parking brake state is provided with a fixed member (51) arranged in the back plate (13) with being fixed to the back plate (13), wherein the stopper (51b) is configured to have elasticity, the fixed member (51) is formed to have a thin plate shape so that the stopper (51b) is bent to exhibit elasticity upon contact of the parking brake lever (34).

2. The drum brake system according to claim 1, **characterized in that** the fixed member is a cable guide (51) having a guide part (51a) configured to guide the brake cable (37) and mounted to the back plate (13) together with the anchor block (21), and the cable guide (51) is integrally provided with the stopper (51b).

## Patentansprüche

1. Trommelbremssystem, umfassend: eine rückseitige Platte (13), an der ein Ankerblock (21) befestigt ist; eine Bremstrommel (14), konfiguriert, um sich zusammen mit einem Rad zu drehen; ein Paar Bremsschuhe (15, 16), in der rückseitigen Platte, mit einem Endabschnitten am Ankerblock (21) aufgestützt angeordnet; einen Radzylinder (17), an der rückseitigen Platte (13) befestigt und konfiguriert, um die Bremsschuhe (15, 16) derart auszudehnen, dass die Bremsschuhe (15, 16) mit einem Innenumfang der Bremstrommel (14) in gleitendem Kontakt sind, um einen Dienstbremszustand zu erhalten; einen Feststellbremshebel (34), konfiguriert, um in Übereinstimmung mit Ziehen eines Bremskabels (37) zu arbeiten, um die Bremsschuhe (15, 16) auszudehnen; und einen elektrischen Aktor (36), mit dem Bremskabel (37) gekoppelt und konfiguriert, um das Bremskabel (37) zu ziehen, um einen Feststellbremszustand zu erhalten,
**dadurch gekennzeichnet, dass** ein Stopper (51b), konfiguriert, um mit dem Feststellbremshebel (34) in Kontakt zu sein, um ein Arbeitsende des Feststellbremshebels (34) im Feststellbremszustand zu beschränken, mit einem festen Element (51) bereitgestellt ist, das mit der rückseitigen Platte (13) befestigt in der rückseitigen Platte (13) angeordnet ist, wobei der Stopper (51b) konfiguriert ist, um Elastizität aufzuweisen, das feste Element (51) gebildet ist, um eine dünne Plattenform aufzuweisen, sodass der Stopper (51b) gebogen ist, um bei Kontakt des Feststellbremshebels (34) Elastizität zu zeigen.

2. Trommelbremssystem nach Anspruch 1, **dadurch gekennzeichnet, dass** das feste Element eine Kabelführung (51) ist, die ein Führungsteil (51a) aufweist, konfiguriert, um das Bremskabel (37) zu führen, und zusammen mit dem Ankerblock (21) an der rückseitigen Platte (13) montiert, und die Kabelführung (51) einteilig mit dem Stopper (51b) bereitgestellt ist.

## Revendications

1. Système de frein à tambour comprenant : une plaque arrière (13) à laquelle est fixé un bloc d'ancrage (21) ; un tambour de frein (14) configuré pour tourner conjointement avec une roue ; une paire de sabots de frein (15, 16) agencés dans la plaque arrière avec une partie d'extrémité supportée par le bloc d'ancrage (21) ; un cylindre de roue (17) fixé à la plaque arrière (13) et configuré pour agrandir les sabots de frein (15, 16) de sorte que les sabots de frein (15, 16) sont en contact coulissant avec une périphérie intérieure du tambour de frein (14) de manière à obtenir un état de frein de service ; un levier de frein de stationnement (34) configuré pour fonctionner en correspondance avec une traction d'un câble de frein (37) de manière à élargir les sabots de frein (15, 16) ; et un actionneur électrique (36) couplé au câble de frein (37) et configuré pour tirer le câble de frein (37) de manière à obtenir un état de frein de stationnement,
**caractérisé en ce qu'**un butoir (51b) configuré pour être en contact avec le levier de frein de stationnement (34) de manière à retenir une extrémité de fonctionnement du levier de frein de stationnement (34) dans l'état de frein de stationnement est pourvu d'un élément fixe (51) agencé dans la plaque arrière (13) en étant fixé à la plaque arrière (13), dans lequel le butoir (51b) est configuré pour présenter une élasticité, l'élément fixe (51) est formé pour présenter une forme de plaque mince de sorte que le butoir (51b) est plié pour présenter une élasticité lors d'un contact du levier de frein de stationnement (34).

2. Système de frein à tambour selon la revendication 1, **caractérisé en ce que** l'élément fixe est un guide de câble (51) présentant une partie guide (51a) configuré pour guider le câble de frein (37) et monté sur la plaque arrière (13) conjointement avec le bloc d'ancrage (21), et le guide de câble (51) est fourni d'un seul tenant avec le butoir (51b).
